# EUROPÄISCHE PATENTANMELDUNG

(11) **EP 2 199 138 A2**
(43) Veröffentlichungstag der Anmeldung: **23.06.2010**
(21) Anmeldenummer: 09013040.2
(22) Anmeldetag: 15.10.2009
(51) Int. Cl.: B60K 15/035

(54) **Verfahren zur Betriebsentlüftungssteuerung an einem Kunststoff-Kraftstoffbehälter sowie Kunststoff-Kraftstoffbehälter**

(30) Priorität: 16.12.2008 DE 102008062243
(71) Anmelder: Kautex Textron GmbH & Co. KG., 53229 Bonn (DE)
(72) Erfinder: Gebert, Klaus, 47877 Willich (DE)
(74) Vertreter: Polypatent

(57) **Zusammenfassung**

Die Erfindung betrifft ein Verfahren zur Betriebsentlüftungssteuerung an einem Kunststoff-Kraftstoffbehälter, bei welchem das Volumen des Kunststoff-Kraftstoffbehälters mittels wenigstens eines Betriebsentlüftungsventils mit Druckhaltefunktion innerhalb eines vorgegebenen Differenzdruckbereichs zum Umgebungsdruck gehalten wird, wobei wenigstens eine einen maximal zulässigen Überdruck definierende Obergrenze des Differenzdruckbereichs in Abhängigkeit der Umgebungstemperatur variiert wird.

## Beschreibung

Die Erfindung betrifft ein Verfahren zur Betriebsentlüftungssteuerung an einem Kunststoff-Kraftstoffbehälter sowie einen Kunststoff-Kraftstoffbehälterfür ein Kraftfahrzeug mit Mitteln zur Be- und Entlüftung bei der Kraftstoffentnahme (Betriebsentlüftung), mit wenigstens einem Betriebsentlüftungsvontil zwischen wenigstens einem Betriebsentlüftungspunkt und einem Kraftstoffdampffilter, wobei das Betriebsentlüftungsventil als Druckhalteventil ausgebildet ist.

Bei modernen PKW mit Hybrid-Antriebskonzepten, umfassend einen Verbrennungsmotor und einen oder mehrere Elektromotoren, finden zunehmend Kraftstoffbehälter mit nicht integrierten Entlüftungssystemen Anwendung. Nicht integrierte Entlüftungssysteme nutzen normalerweise getrennte Entlüftungspfäde für die Betriebsentlüftung und die Betankungsentlüftung des Kraftstoffbehälters. Bei der Betriebsentlüftung eines Kraftstoffbehälters gilt es, den durch Schwallbewegungen des Kraftstoffs, bedingt durch die Fahrzeugdynamik und Temperaturentwicklung anfallenden Kraftstoffdampf aus dem Behälter abzuführen, wohingegen bei der Betankungsentlüftung des Kraftstoffbehälters das aus dem Behälter von der einströmenden Flüssigkeit verdrängte Gasvolumen über ein Kraftstoffdampffilter an die Atmosphäre geleitet wird, wobei das Kraftstoffdampffilter, das üblicherweise als Aktivkohlefilter ausgebildet ist, mit Kohlenwasserstoffen beladen wird und vollständig von Kohlenwasserstoffen befreites Abgas an die Atmosphäre abgegeben wird. Die Entladung bzw. Rückspülung des Kraftstoffdampffilters erfolgt normalerweise während der Fahrzyklen des Kraftfahrzeugs, wobei die Verbrennungsluft für die Brennkraftmaschine über das Kraftstoffdampffilter angesaugt wird, wodurch eine Entladung und Rückspülung des Kraftstoffdampffilters erfolgt.

Bei Hybridfahrzeugen sind diese möglichen Rückspülzyklen des Kraftfahrzeugs um die Zeiten verringert, in denen das Kraftfahrzeug elektromotorisch angetrieben wird. Folglich müssen die hierfür vorgesehenen Kraftstoffdampffilter eine größere Kapazität aufweisen, oder es müssen Vorkehrungen getroffen werden, um den Übergang von flüssigen Kohlenwasserstoffen in die Gasphase zu vermindern. Aus diesem Grund werden Kraftstofftanks für Hybridanwendungen häufig als Drucktanks mit nicht integrierten Entlüftungssystemen hergestellt. Die Entlüftungsventile werden hierzu als Druckhalteventile ausgebildet, die elektrisch schaltbar sind, um vor dem Einleiten eines Betankungsvorgangs einen Druckausgleich mit der Atmosphäre herstellen zu können. Dies wird üblicherweise durch elektrisch geschaltete Entlüftungsventile bewerkstelligt. Der abhängig von der Konstruktion des Kraftstoffbehälters zulässige Überdruck des Kraftstoffbehälters kann beispielsweise in der Größenordnung von 400 mbar betragen, der maximal zulässige Unterdruck etwa 100 mbar. Bei der Verwendung von Stahltanks ist dies unproblematisch soweit Stahltanks mit einer ausreichenden Materialstärke Anwendung finden. Dies geht allerdings mit dem Nachteil einer deutlichen Gewichtserhöhung einher. Bei der Verwendung von Kunststoff-Kraftstoffbehältem kann es allerdings je nach Geometrie des Kraftstoffbehälters unter hohem Druck zu Deformationen der Tankblase kommen. Dem wird häufig durch Bandagen, Verstärkungsprofile und dergleichen entgegengewirkt. Solche Maßnahmen sind konstruktiv recht aufwändig, außerdem tragen diese nicht dem Umstand Rechnung, dass das Deformationsverhalten von Kunststoff bzw. dessen Plastizität temperaturabhängig ist. Ein Kunststoff-Kraftstoffbehälter kann bei Überschreiten bestimmter Temperaturen einen Teil seiner Formsteifigkeit verlieren. Dem wird durch die bekannten Verstärkungsmaßnahmen nur bedingt Rechnung getragen.

Der Erfindung liegt daher die Aufgabe zugrunde, ein Verfahren zur Betriebsentlüftungssteuerung an einem Kunststoff-Kraftstoffbehälter bereitzustellen, welches die zuvor beschriebenen Nachteile weitestgehend vermeidet. Der Erfindung liegt weiterhin die Aufgabe zugrunde, einen entsprechenden Kraftstoffbehälter bereitzustellen.

Die Aufgabe wird zunächst gelöst durch ein Verfahren zur Betriebsenflüftungssteuerung an einem Kunststoff-Kraftstoffbehälter, bei welchem das Volumen des Kunststoff-Kraftskoffbehälters mittels wenigstens eines Betriebsentlüftungsventils mit Druckhaltefunktion innerhalb eines vorgegebenen Differenzbereichs zum Umgebungsdruck gehalten wird, wobei wenigstens eine einen maximal zulässigen Überdruck definierende Obergrenze des Differenzdruckbereichs in Abhängigkeit der Umgebungstemperatur variiert wird.

Mit anderen Worten, es wird erfindungsgemäß eine umgebungstemperaturabhängige Druckregelung des Kraftstoffbehälters vorgeschlagen, womit zuverlässig der sich in Abhängigkeit von der Umgebungstemperatur ändernden Formsteifigkeit des Kraftstoffbehälters Rechnung getragen wird.

Unter dem Begriff "Umgebungstemperatur" im Sinne der vorliegenden Erfindung ist auch die Systemtemperatur, d. h. die Temperatur des Kraftstoffbehälters beispielsweise bedingt durch die Heißförderung von Dieselkraftstoff zu verstehen. Bekanntlich erfährt der Kraftstoff bei einigen Kraftstoffzufuhrsystemen mit Kraftstoffrücklauf ebenfalls eine gewisse Erwärmung, die zur Erwärmung des Gesamtsystems Kraftbehälter beitragen.

Bei einer bevorzugten Variante des Verfahrens gemäß der Erfindung ist vorgesehen, dass eine Absenkung der Obergrenze des Differenzdruckbereichs vorgenommen wird, wenn die Umgebungstemperatur wenigstens eine vorgegebene Obergrenze überschreitet, und dass eine Anhebung der Obergrenze des Differenzdruckbereichs vorgenommen wird, wenn die Umgebungstemperatur wenigstens eine vorgegebene Untergrenze unterschreitet. Die Obergrenze und die Untergrenze können zusammenfallen. Es kann jedoch eine von der Obergrenze abweichende Untergrenze vorgesehen sein, so dass regelungstechnisch eine Schalthysterese vorgesehen ist.

Bei einer bevorzugten Variante des Verfahrens ist die Verwendung wenigstens eines Betriebsentlüftungsventils mit einer temperaturabhängigen Öffnungs- und Schließcharakteristik vorgesehen.

Der zulässige Differenzdruck zur Umgebungstemperatur kann zwischen 0 und 500 mbar betragen.

Besonders bevorzugt wird das Verfahren unter Verwendung eines stromlos temperaturabhängig schaltbaren Betriebsentlüftungsventils durchgeführt.

Die der Erfindung zugrunde liegende Aufgabe wird weiterhin gelöst durch einen Kunststoff-Kraftstoffbehälter mit Mitteln zur Be- und Entlüftung bei der Kraftstoffentnahme (Betriebsentlüftung), mit wenigstens einem Betriebsentlüftungsventil zwischen wenigstens einem Betriebsentlüftungspunkt und einem Kraftstoffdampffilter, wobei das Betriebsentlüftungsventil als Druckhalteventil ausgebildet ist und wobei sich der Kunststoff-Kraftstoffbehälter dadurch auszeichnet, dass das Betriebsentlüftungsventil eine umgebungstemperaturabhängige Schaltcharakteristik aufweist.

Die Erfindung ist so zu verstehen, dass der Kunststoff-Kraftstoffbehälter eine beliebige komplexe Gestalt aufweisen kann, wobei je nach Kontur des Kunststoff-Kraftstoffbehälters an mehreren in Einbaulage oben liegenden Stellen Betriebsentlüftungspunkte auf verschiedenen Niveaus vorgesehen sein können. Betriebsentlüftungssysteme der zuvor beschriebenen Art können an jedem Entlüftungspunkt oder auch in einer zentralen Entlüftungssammelleitung vorgesehen sein.

Bei einer zweckmäßigen Ausgestaltung des Kunststoff-Kraftstoffbehälters gemäß der Erfindung ist vorgesehen, dass das Betriebsentlüftungsventil als stromlos selbsttätig schaltendes Ventil ausgebildet ist. Diese Ausgestaltung ist besonders dann vorteilhaft, wenn eine Entlüftungssteuerung ohne Fahrzeugbatterie realisiert werden soll. Es ist beispielsweise denkbar, dass das Fahrzeug beispielsweise in einer Nachlackierkammer ohne eingebaute Fahrzeugbatterie höheren Umgebungstemperaturen ausgesetzt ist.

Bei einer vorteilhaften Variante des Kunststoff-Kraftstoffbehälters kann die Ventilfeder beispielsweise aus einer Formgedächtnis-Legierung, d. h. einem sogenannten Memory-Metall bestehen. Es handelt sich hierbei um Legierungen, die sich an eine frühere Formgebung trotz nachfolgender starker Verformung scheinbar erinnern können. Eine dem Material einmal aufgezwungene Formänderung kann beispielsweise durch eine Erwärmung rückgängig gemacht werden. Zweckmäßigerweise werden dabei dann solche Materialien verwendet, die einen 2-Wege-Memory-Effekt zulassen, d. h. dass diese Metalle beim Abkühlen eine Formrückkehr in die Ausgangsgestalt erfahren.

Bei einer besonders vorteilhaften Ausgestaltung des Kunststoff-Kraftstoffbehälters gemäß der Erfindung ist vorgesehen, dass das Betriebsentlüftungsventil wenigstens einen federbelastet in der geschlossenen Stellung gehaltenen Ventilkörper aufweist, wobei wenigstens eine Ventilfeder eine temperaturabhängige Federsteifigkeit besitzt.

Die Zuhaltekraft des Betriebsentlüftungsventils kann beispielsweise bis zu einer Umgebungstemperatur oder Systemtemperatur von etwa 50°C etwa 100 % betragen, was einem maximal zulässigen Überdruck von etwa 400 mbar in Bezug auf den Atmosphärendruck entsprechen kann. Bei einer Umgebungstemperatur bzw. Systemtemperatur von etwa 70°C bzw. von über 70°C kann beispielsweise vorgesehen sein, dass die Zuhaltekraft des Entlüftungsventils gegen 0 % geht, sodass der Kraftstoffbehälter faktisch drucklos ist.

Die Ventilfeder kann beispielsweise als Bimetallfeder ausgebildet sein. Je nach Umgebungstemperatur verändert sich die Federsteifigkeit der Ventilfeder, wodurch mit einfachsten Mitteln eine temperaturabhängige Schaltcharakteristik realisiert wird.

Bei einer zweckmäßigen Ausgestaltung des Kunststoff-Kraftstoffbehälters gemäß der Erfindung ist vorgesehen, dass dieser eine Betankungsentlüftungseinrichtung umfasst, die einen von der Betriebsentlüftung separaten und schaltbaren Entlüftungspfad nutzt.

Der Kunststoff-Kraftstoffbehälter gemäß der Erfindung ist zweckmäßigerweise als Kunststoff-Kraftstoffbehälter für ein Hybridkraftfahrzeug ausgebildet.

Eine vorteilhafte Variante des Kunststoff-Kraftstoffbehälters gemäß der Erfindung sowie das Verfahren gemäß der Erfindung werden nachstehend anhand eines in den Zeichnungen dargestellten Ausführungsbeispiels erläutert. Es zeigen:

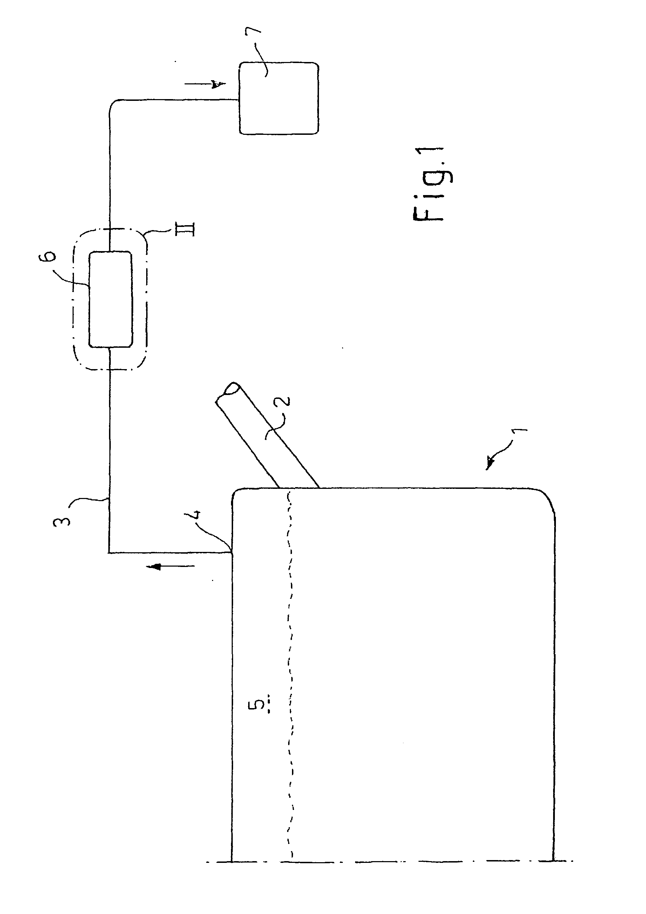

- Figur 1: eine schematische, stark vereinfachte Darstellung eines Kraftstoffbehälters gemäß der Erfindung und
- Figur 2: eine stark vereinfachte und schematische Darstellung eines Betriebsentlüftungsventils gemäß der Erfindung.

Der Kraftstoffbehälter 1 gemäß der Erfindung ist als Kunststoff-Kraftstoffbehälter ausgebildet und in bekannter Art und Weise mit einem Einfüllrohr 2, einer nicht dargestellten Betankungsentlüftungeleitung und wenigstens einer Betriebsentlüftungsleitung 3 versehen. Die Betriebsenflüftungsleitung 3 kommuniziert über einen oder mehrere Entlüftungspunkte 4 mit dem Ausgleichsvolumen 5 des Kraftstoffbehälters, das sich naturgemäß in Einbaulage oben befindet. Das Ausgleichsvolumen 5 ist das freie über dem Flüssigkeitsvolumen 6 anstehende Gasvolumen des Kraftstoffbehälters 1, welches bei Volumenänderung des Kraftstoffs sicherstellt, dass keine flüssigen Kohlenwasserstoffe in das Entlüftungssystem gelangen.

Die an das Ausgleichsvolumen 5 angeschlossene Betriebsentlüftungsleitung 3 ist über ein Betriebsentlüftungsventil 6 mit einem Kraftstoffdampffilter 7 verbunden. Das Kraftstoffdampffilter 7 kann in bekannter Art und Weise als Aktivkohlefilter mit einem oder mehreren, Sorbentien enthaltenden Volumina ausgebildet sein.

Wie nachstehend noch erläutert wird, ist das Betriebsentlüftungsventil 6 als Ventil mit Druckhaltefunktion ausgeführt, so dass sichergestellt wird, dass ein gewisser Differenzdruckbereich zum Umgebungsdruck innerhalb des Kunststoff-Kraftstoffbehälters 1 gehalten wird. Dies dient insbesondere dazu, die Neigung der flüssigen Kohlenwasserstoffe, in die Gasphase überzutreten, zu verringern. Hierdurch ist es schlussendlich möglich, insbesondere bei Hybridfahrzeugen, Kraftstoffdampffilter mit einer Beladungskapazität vorzusehen, die trotz kürzerer Entladungszyklen die Beladungskapazität eines üblichen Kraftstoffdampffilters nicht wesentlich übersteigt.

Es ist für den Fachmann ersichtlich, dass der Kraftstoffbehälter 1 gemäß der Erfindung an mehreren Entlüftungspunkten 4 jeweils mit einem Betriebsentlüftungsventil ausgestattet sein kann.

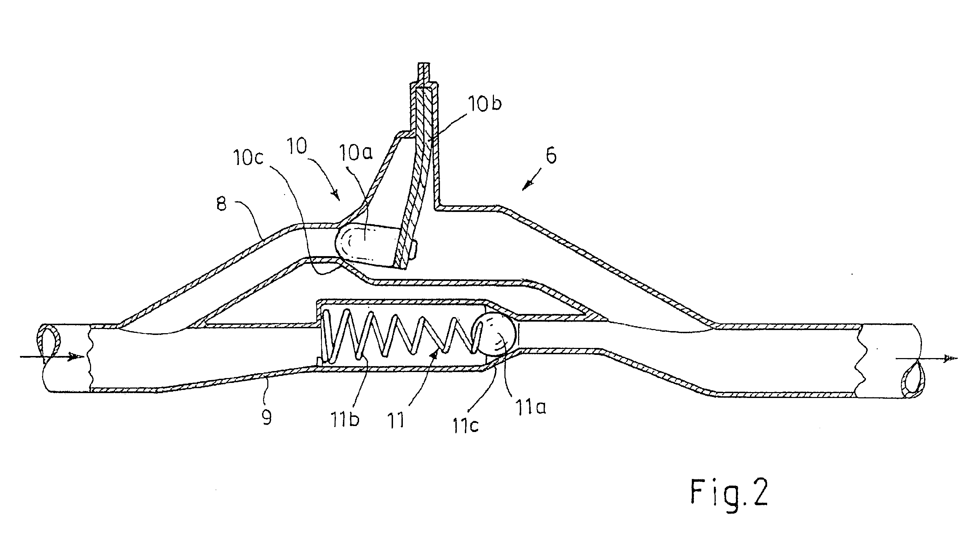

Ein solches Betriebsentlüftungsventil 6 ist beispielhaft in Figur 2 vereinfacht dargestellt.

Dieses umfasst einen Entlüftungspfad 8 und einen Belüftungspfad 9. Der Entlüftungspfad 8 ist mittels eines Entlüftungsventils 10 verschlossen und der Belüftungspfad 9 mittels eines Belüftungsventils 11. Das Entiüftungsventil 10 umfasst einen Ventilkörper 10 a, der mittels einer Bimetallfeder 10 b in geschlossener Stellung gehalten wird. Die Bimetallfeder 10 b hat eine Federsteifigkeit, die so ausgelegt ist, dass der Ventilkörper 10 a durch eine von Seiten des Ausgleichsvolumens 5 wirkenden Überdruck von ≥ 400 mbar in Bezug auf den Umgebungsdruck aus dem mit 10 c bezeichneten Ventilsitz gehoben wird und die Betriebsentlüftungsleitung 3 bis zum Kraftstoffdampffilter 7 freigibt. Steigt die Umgebungstemperatur über einen vorbestimmten Wert, ändert sich die Federsteifigkeit der Bimetallfeder 10 b derart, dass der Ventilkörper 10 a bereits bei einem geringeren Behälterinnendruck aus dem Ventilsitz 10 c gehoben wird, um einer temperaturbedingten Deformation des Kunststoff-Kraftstoffbehälters 1 entgegen zu wirken.

Das in dem parallelen Belüftungspfad 9 vorgesehene Belüftungsventil 11 umfasst ebenfalls einen Ventilkörper 11 a, der als Kugel ausgebildet ist. Der Ventilkörper 11 a wird mittels einer Druckfeder 11 b in den Ventilsitz 11 c gedrückt, was der Normalstellung des Belüftungsventils entspricht. Das Belüftungsventil 11 öffnet z. B. bei einem Atmosphärenüberdruck von etwa 100 mbar bzw. bei einem Behälterunterdruck von etwa 100 mbar.

Es ist grundsätzlich möglich, dass auch das Entlüftungsventil eine umgebungstemperaturabhängige Schaltcharakteristik aufweist.

Erfindungsgemäß ist nun vorgesehen, dass mittels eines oder mehrerer Betriebsentlüftungsventile 6, die wie vorstehend beschrieben ausgebildet sind, innerhalb des Kunststoff-Kraftstoffbehälters 1 einen Differenzdruckbereich von etwa -100 mbar bis +400 mbar, bezogen auf den Atmosphärendruck, gehalten wird. Dabei bestimmt die Schließkraft des Entlüftungsventils 10 die maximal zulässige Obergrenze des Differenzdruckbereichs. Die Schließkraft des Belüftungsventils 11 bestimmt hingegen die maximal zulässige Untergrenze des Differenzdruckbereichs. Wie vorstehend bereits erläutert, ist die Obergrenze aufgrund der Eigenschaften der Bimetallfeder 10 b des Entlüftungsventils 10 in Abhängigkeit von der Umgebungstemperatur variabel. Bei höherer Umgebungstemperatur ist die Vorspannung, mit welcher der Ventilkörper 10 a in den Ventilsitz 10 c gedrückt wird, geringer, so dass hierdurch eine stromlos funktionierende temperaturabhängige Regelung bewerkstelligt wird.

Darüber hinaus besteht die Möglichkeit, die für das System notwendige, elektrische Druckschaltfunktion über eine elektrische Aufheizung des beschriebenen Federelements (z. B. Bimetall oder sogenanntes Memory-Metall) zu realisieren. Dabei kann die Aufheizung durch Bestromung des Federelements selber und/oder durch ein zusätzliches Heizelement erfolgen.

### Bezugszeichenliste

- 1: Kunststoff-Kraftstoffbehälter
- 2: Einfüllrohr
- 3: Betriebsentlüftungsleitung
- 4: Entlüftungspunkt
- 5: Ausgleichsvolumen
- 6: Betriebsentlüftungsventil
- 7: Kraftstoffdampffilter
- 8: Entlüftungspfad
- 9: Belüftungspfad
- 10: Entlüftungsventil
- 10 a: Ventilkörper
- 10 b: Bimetallfeder
- 10 c: Ventilsitz
- 11: Belüftungsventil
- 11 a: Ventilkörper
- 11 b: Druckfeder
- 11 c: Ventilsitz

## Patentansprüche

1. Verfahren zur Betriebsentlüftungssteuerung an einem Kunststoff-Kraftstoffbehälter, bei welchem das Volumen des Kunststoff-Kraftstoffbehälters mittels wenigstens eines Betriebsentlüftungsventils mit Druckhaltefunktion innerhalb eines vorgegebenen Differenzdruckbereichs zum Umgebungsdruck gehalten wird, wobei wenigstens eine einen maximal zulässigen Überdruck definierende Obergrenze des Differenzdruckbereichs in Abhängigkeit der Umgebungstemperatur variiert wird.

2. Verfahren nach Anspruch 1, **dadurch gekennzeichnet, dass** eine Absenkung der Obergrenze des Differenzdruckbereichs vorgenommen wird, wenn die Umgebungstemperatur wenigstens eine vorgegebene Obergrenze überschreitet, und dass eine Anhebung der Obergrenze des Differenzdruckbereichs vorgenommen wird, wenn die Umgebungstemperatur wenigstens eine vorgegebene Untergrenze unterschreitet.

3. Verfahren nach einem der Ansprüche 1 oder 2, **gekennzeichnet durch** die Verwendung wenigstens eines Betriebsentlüftungsventils mit einer temperaturabhängigen Öffnungs- und Schließcharakteristik.

4. Verfahren nach einem der Ansprüche 1 bis 3, **dadurch gekennzeichnet, dass** der zulässige Differenzdruck (ΔT) zwischen 0 und 500 mbar betragen kann.

5. Verfahren nach einem der Ansprüche 2 bis 4, **dadurch gekennzeichnet, dass** als vorgegebene Obergrenze für die Umgebungstemperatur eine Temperatur von 70° C gewählt wird.

6. Kunststoff-Kraftstoffbehälter (1) für Kraftfahrzeuge mit Mitteln zur Be- und Entlüftung bei der Kraftstoffentnahme (Betriebsentlüftung), mit wenigstens einem Betriebsentlüftungsventil (6) zwischen wenigstens einem Betriebsentlüftungspunkt (4) und einem Kraftstoffdampffilter (7), wobei das Betriebsentlüftungsventil (6) als Druckhalteventil ausgebildet ist, **dadurch gekennzeichnet, dass** das Betriebsentlüftungsventil (6) eine umgebungstemperaturabhängige Schaltcharakteristik aufweist.

7. Kunststoff-Kraftstoffbehälter nach Anspruch 6, **dadurch gekennzeichnet, dass** das Betriebsentlüftungsventil (6) als stromlos selbsttätig reglendes Ventil ausgebildet ist.

8. Kunststoff-Kraftstoffbehälter nach einem der Ansprüche 6 oder 7, **dadurch gekennzeichnet, dass** das Betriebsentlüftungsventil (6) wenigstens einen federbelastet in einer geschlossenen Stellung gehaltenen Ventilkörper (10 a) aufweist, wobei wenigstens eine Ventilfeder eine temperaturabhängige Federsteifigkeit besitzt.

9. Kunststoff-Kraftstoffbehälter nach einem der Ansprüche 6 bis 8, **dadurch gekennzeichnet, dass** die Ventilfeder als Bimetallfeder (10 a) ausgebildet ist.

10. Kunststoff-Kraftstoffbehälter nach einem der Ansprüche 6 bis 8 **dadurch gekennzeichnet, dass** die Ventilfeder aus einer Formgedächtnis-Legierung besteht.

11. Kunststoff-Kraftstoffbehälter für ein Hybridkraftfahrzeug nach einem der Ansprüche 1 bis 9.
